# EUROPEAN PATENT SPECIFICATION

(11) **EP 3 007 515 B1**
(45) Date of publication and mention of the grant of the patent: **17.04.2019**
(21) Application number: 14896184.0
(22) Date of filing: 27.06.2014
(51) Int. Cl.: H04W 88/02, H04W 72/00, H04W 84/12, H04W 48/16, H04L 29/08, H04L 12/24, H04W 12/06, H04W 12/08, H04W 48/20, H04W 4/50, H04W 76/10, H04W 76/11, H04W 88/06

(54) **METHOD, TERMINAL, CLIENT AND SYSTEM FOR ACCESSING WIRELESS NETWORK**
VERFAHREN, ENDGERÄT, CLIENT UND SYSTEM ZUM ZUGRIFF AUF EIN DRAHTLOSES NETZWERK
PROCÉDÉ, TERMINAL, CLIENT ET SYSTÈME POUR L'ACCÈS À UN RÉSEAU SANS FIL

(43) Date of publication of application: 13.04.2016
(73) Proprietor: Huawei Technologies Co., Ltd., Longgang District Shenzhen, Guangdong 518129 (CN)
(72) Inventor: GAO, Xudong, Shenzhen Guangdong 518129 (CN)
(74) Representative: Pfenning, Meinig & Partner mbB
(86) International application number: PCT/CN2014/081003
(87) International publication number: WO 2015/196472

(56) References cited:
- WO-A1-2011/139962
- CN-A- 101 931 532
- CN-A- 102 256 241
- CN-A- 102 550 063
- CN-A- 103 688 564
- US-A1- 2006 239 208
- US-A1- 2014 028 817

## Description

### TECHNICAL FIELD

The present invention relates to the field of communications technologies, and in particular, to a method, terminal, client, smartcard, and system for accessing a wireless network.

### BACKGROUND

With the development of wireless network technologies, more and more smartcards implement access to a wireless network device. Currently, most of smartcards have their own WIFI module and a corresponding WIFI smartcard client. A working mode of the WIFI module has two types; one is an AP (Access Point) access point mode, where in this mode, the WIFI module provides a function of a WIFI access point and another device may access this access point. The other mode is a STA (Station) client mode, where in this mode, the WIFI module can connect to another WIFI access point. When the smartcard starts, the WIFI module in the smartcard automatically enters the AP mode and provides a fixed server set identifier SSID (Service Set Identifier), where the SSID is set when the smartcard is delivered from a factory. In an actual application, after a user starts, by using a mobile phone, a smartcard client corresponding to the smartcard, the mobile phone can connect to the smartcard by using the service set identifier SSID. After the user inputs an SSID and a password of a target router, the smartcard client sends the SSID and password of the target router to the smartcard. After receiving the SSID and password of the target router, the smartcard switches the WIFI working mode of the smartcard to the STA mode and connects to the target router according to the SSID and password of the target router. The smartcard client controls the mobile phone to access the target router by means of WIFI and search for, by using a link of the target router, the smartcard that accesses the wireless network. After the smartcard is found, the user can perform management on the smartcard. However, currently, in this technology, if the smartcard cannot be found, the management on the smartcard cannot be implemented, and there may be various reasons, for example, a reason may be that the smartcard cannot connect to the target router, or a connection of another aspect is faulty, and a true reason remains unknown.

US2006239208A1 discloses a wireless device that desires to be connected to a wireless network broadcasts itself and its capabilities to a network using an information element. The information element is provided with frames, such as management frames, in a channel that is not protected or encrypted. The information element is forwarded to one or more potential registrar devices. One of the registrar devices then provides configuration information to the enrollee, for example as a registrar information element. The configuration information may be passed out of band or in band, and may be passed using cryptography, which may involve public key cryptography, encryption with a PIN, or some other type of secure exchange. US2014028817A1 discloses that a camera detects devices, such as other cameras, smart devices, and access points, with which the camera may communicate. The camera may alternate between operating as a wireless station and a wireless access point. The camera may connect to and receive credentials from a device for another device to which it is not connected. The camera is configured to operate as a wireless access point, and is configured to receive credentials from a smart device operating as a wireless station. The camera may then transfer the credentials to additional cameras, each configured to operate as wireless stations. The camera and additional cameras may connect to a smart device directly or indirectly (for instance, through an access point), and the smart device may change the camera mode of the cameras. The initial modes of the cameras may be preserved and restored by the smart device upon disconnection.

WO2011139962A1 relates generally to the configuration of wireless networks and the configuration of electronic devices to connect to wireless networks, especially when those electronic devices have limited user interfaces and/or no display screen. It makes use of devices already connected to a wireless network, previously connected to a wireless network, or capable of acting as an interface to discover the connection settings required to connect to the wireless network. It further uses a shared communication medium between that connected device and an unconnected device in order to share the connection settings needed to connect the unconnected device.

### SUMMARY

In view of the foregoing raised technical problem in the prior art, embodiments of the present invention provide a method, terminal, client, and system for accessing a wireless network, so as to implement a quicker, more convenient, and more flexible operation on the smartcard.

According to a first aspect, a method for accessing a wireless network according to claim 1 is provided.

According to a second aspect, a terminal for accessing a wireless network according to claim 3 is provided.

According to a third aspect, a client for accessing a wireless network according to claim 6 is provided. Preferred embodiments are set out in the dependent claims.

In the foregoing solutions provided in the embodiments of the present invention, the terminal or the smartcard client acquires an SSID and a password of a wireless network and notifies the smartcard of the SSID and password of the wireless network, so that the smartcard connects to the wireless network; and in addition, the terminal or the smartcard client can manage the smartcard according a result of a connection success of the smartcard, so that management on the smartcard is quicker, more convenient and more flexible. In addition, in the embodiments of the present invention, the terminal or the smartcard client can further prompt a user about a connection situation according to a connection result that is returned by the smartcard, so as to improve user experience.

### BRIEF DESCRIPTION OF DRAWINGS

FIG. 1 is a schematic structural diagram of a system for accessing a wireless network by a smartcard according to an embodiment of the present invention;
FIG. 2 is a flowchart of a method for accessing a wireless network according to an embodiment of the present invention;
FIG. 3 is a flowchart of a method for accessing a wireless network according to an embodiment of the present invention;
FIG. 4 is a flowchart of a method for accessing a wireless network according to an embodiment of the present invention;
FIG. 5 is a flowchart of a method for accessing a wireless network according to an embodiment of the present invention;
FIG. 6 is a schematic structural diagram of a terminal for accessing a wireless network according to an embodiment of the present invention;
FIG. 7 is a schematic structural diagram of a client for accessing a wireless network according to an embodiment of the present invention;
FIG. 8 is a schematic structural diagram of a smartcard for accessing a wireless network according to an embodiment of the present invention;
FIG. 9 is a schematic structural diagram of a terminal for accessing a wireless network according to an embodiment of the present invention;
FIG. 10 is a schematic structural diagram of a smartcard for accessing a wireless network according to an embodiment of the present invention; and
FIG. 11 is a schematic structural diagram of a system for accessing a wireless network according to an embodiment of the present invention.

### DESCRIPTION OF EMBODIMENTS

In order to solve a technical problem currently exists in a process of accessing a wireless network by a smartcard, in the present invention, a smartcard is controlled to access a wireless network by prompting an access result in a process of accessing a target router by the smartcard and according to a difference of the access result.

To make the objectives, technical solutions, and advantages of the embodiments of the present invention clearer, the following clearly and completely describes the technical solutions in the embodiments of the present invention with reference to the accompanying drawings in the embodiments of the present invention. Apparently, the described embodiments are a part rather than all of the embodiments of the present invention. All other embodiments obtained by persons of ordinary skill in the art based on the embodiments of the present invention without creative efforts shall fall within the protection scope of the present invention.

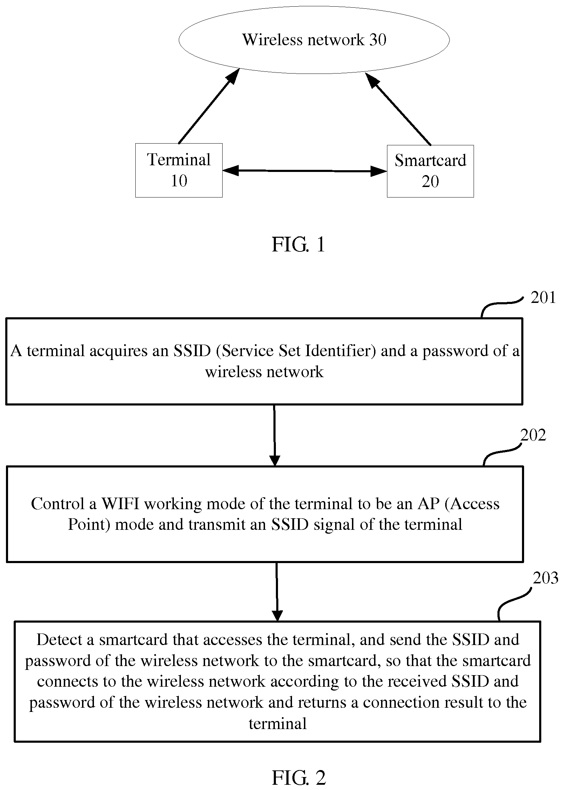

Referring to FIG. 1, which is a schematic diagram of a system for accessing a wireless network by a smartcard according to an embodiment of the present invention, the system for accessing a wireless network includes a terminal 10, a smartcard 20, and a wireless network 30. The smartcard in this embodiment of the present invention may be an access device that is easy to carry, such as an SD (Smart Card), or may be a wearable device. The terminal may be a terminal that can connect to a wireless network, such as a mobile phone and a PAD. After the smartcard is started, a WIFI module in the smartcard runs in a STA working mode and searches for a service set identifier SSID of the terminal. A smartcard client of the smartcard may be pre-installed on the terminal. After the terminal starts the smartcard client, network access information of a wireless network that is currently used by the terminal is acquired, such as, an SSID and a password of the wireless network. The smartcard client may further prompt a user to input an SSID and a password of a wireless network, so that the user may select a wireless network that needs to be accessed. The smartcard client may control a WIFI module of the terminal to enter an AP working mode, provide a function of a network access point, and provide a signal of the service set identifier SSID of the terminal, so that the smartcard can access the terminal. The smartcard searches for the SSID provided by the terminal and accesses a network provided by the terminal. The smartcard client detects the smartcard that accesses the terminal and sends the SSID and password of the wireless network to the smartcard that accesses the terminal. The smartcard connects to the wireless network according to the received SSID and password of the wireless network and notifies the smartcard client of a connection result of the connection to the wireless network. The smartcard client may be notified of the connection result in a manner of a success code or an error code. If the smartcard client receives the success code, the terminal is controlled, according to the received connection result, to switch to a STA working mode; then the terminal connects to the wireless network, and the smartcard client searches for the smartcard that has already accessed the wireless network, and implements management on the smartcard. When the smartcard client receives the error code, that is, when the connection result of the connection to the wireless network is a failure, prompt information of the connection failure can be displayed and the user is notified of the connection failure. The smartcard client may further connect to an official website of the smartcard and query a solution corresponding to the error code, so that a fault of connecting to a wireless network by the smartcard is solved in time, and timeliness of connecting to the wireless network by the smartcard is ensured.

The system provided in this embodiment of the present invention acquires an SSID and a password of a wireless network and notifies the smartcard of the SSID and password of the wireless network, so that the smartcard connects to the wireless network; and in addition, the system can manage the smartcard according to a result of a connection success of the smartcard, so that the management on the smartcard is quicker, more convenient, and more flexible. In addition, in this embodiment of the present invention, the system can further prompt a user about a connection situation according to a connection result that is returned by the smartcard, so as to improve user experience.

As shown in FIG. 2, an embodiment of the present invention provides a method for accessing a wireless network, and the method includes:
S201: A terminal acquires an SSID (Service Set Identifier) and a password of the wireless network.
S202: Control a WIFI working mode of the terminal to be an AP (Access Point) mode and transmit an SSID signal of the terminal.
S203: Detect a smartcard that accesses the terminal and send the SSID and password of the wireless network to the smartcard, so that the smartcard connects to the wireless network according to the received SSID and password of the wireless network and returns a connection result to the terminal.

In this embodiment of the present invention, that the smartcard connects to the wireless network according to the received SSID and password of the wireless network and returns a connection result to the terminal includes: connecting, by the smartcard, to the wireless network; and if the connection succeeds, returning a connection result that includes a success code to the terminal.

In this embodiment of the present invention, the method further includes: if the connection result that is returned by the smartcard and received by the terminal is a connection success, controlling, according to the received result of the connection success, the terminal to switch to a STA (Station) working mode, enabling the terminal to connect to the wireless network and search for the smartcard that has already accessed the wireless network so as to perform control on the smartcard.

In this embodiment of the present invention, that the smartcard connects to the wireless network according to the received SSID and password of the wireless network and returns a connection result to the terminal includes: if the connection fails, returning a connection result that includes an error code to the terminal, enabling the terminal to manage the smartcard according to the connection result that is returned by the smartcard.

In this embodiment of the present invention, the foregoing method may be implemented by installing, on the terminal, a smartcard client corresponding to the smartcard, where the smartcard client may be configured to perform steps of the foregoing method.

According to the method provided in this embodiment of the present invention, the smartcard client acquires an SSID and a password of a wireless network that is currently accessed by a terminal, and notifies the smartcard of the SSID and password of the wireless network, so that the smartcard connects to the wireless network; and in addition, the smartcard client can manage the smartcard according to a result of a connection success of the smartcard, so that the management on the smartcard is quicker, more convenient, and more flexible, and manual input is avoided. In addition, in this embodiment of the present invention, the smartcard client can further prompt a user about a connection situation according to a connection result that is returned by the smartcard, so as to improve user experience.

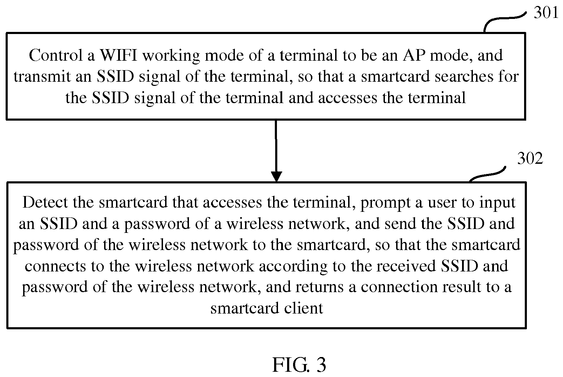

As shown in FIG. 3, an embodiment of the present invention provides a method for accessing a wireless network, and the method includes:
S301: Control a WIFI working mode of a terminal to be an AP mode, and transmit an SSID signal of the terminal, so that a smartcard searches for the SSID signal of the terminal and accesses the terminal.
S302: Detect the smartcard that accesses the terminal, prompt a user to input an SSID and a password of a wireless network, and send the SSID and password of the wireless network to the smartcard, so that the smartcard connects to the wireless network according to the received SSID and password of the wireless network, and returns a connection result to the smartcard client.

In this embodiment of the present invention, the method further includes: if the connection result that is returned by the smartcard and received by the terminal is a connection success, controlling, according to the received result of the connection success, the terminal to switch to a STA working mode, enabling the terminal to connect to the wireless network and search for the smartcard that has already accessed the wireless network so as to perform control on the smartcard.

In this embodiment of the present invention, the method further includes: if the connection result that includes an error code and is returned by the smartcard and received by the terminal is a connection failure, connecting to an official website of the smartcard through a network, and querying information corresponding to the error code.

In this embodiment of the present invention, the foregoing method may be implemented by installing, on the terminal, the smartcard client corresponding to the smartcard, where the smartcard client may be configured to perform steps of the foregoing method.

According to the method provided in this embodiment of the present invention, the smartcard client acquires an SSID and a password of a wireless network that is currently accessed by a terminal, and notifies the smartcard of the SSID and password of the wireless network, so that the smartcard connects to the wireless network; and in addition, the smartcard client can manage the smartcard according to a result of a connection success of the smartcard, so that the management on the smartcard is quicker, more convenient, and more flexible, and manual input is avoided. In addition, in this embodiment of the present invention, the smartcard client can further prompt a user about a connection situation according to a connection result that is returned by the smartcard, so as to improve user experience.

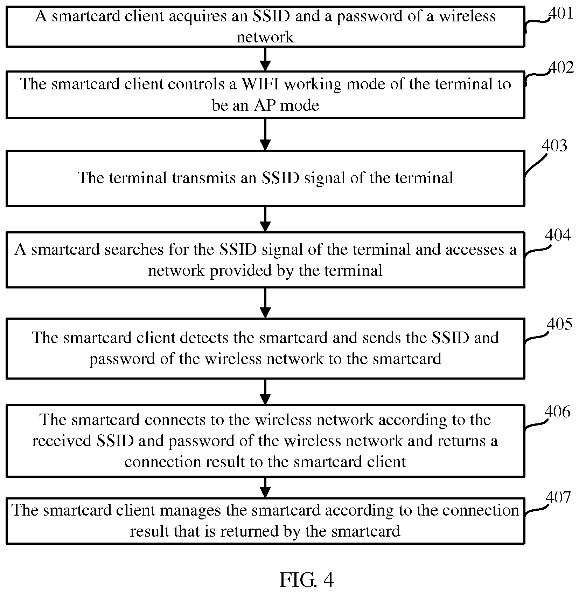

Referring to FIG. 4, an embodiment of the present invention provides a method for accessing a wireless network, where the method is described by using an example in which a smartcard accesses a wireless network, and the method may be applied to a system that includes a smartcard, a smartcard client, and a wireless network. In this embodiment of the present invention, the smartcard client is installed in a terminal that accesses the wireless network, and the method includes the following steps:
S401: The smartcard client acquires an SSID and a password of the wireless network.

In this embodiment of the present invention, the terminal currently accesses the wireless network, the terminal starts the smartcard client, and the smartcard client may acquire the SSID and password of the wireless network by using the terminal.

S402: The smartcard client controls a WIFI working mode of the terminal to be an AP mode.

The smartcard client enables a working mode of a WIFI module of the terminal to be the AP mode by invoking an interface, so that the smartcard can access a network provided by the terminal.

S403: The terminal transmits an SSID signal of the terminal.

S404: The smartcard searches for the SSID signal of the terminal and accesses a network provided by the terminal.

S405: The smartcard client detects the smartcard and sends the SSID and password of the wireless network to the smartcard.

S406: The smartcard connects to the wireless network according to the received SSID and password of the wireless network and returns a connection result to the smartcard client.

In this embodiment of the present invention, the smartcard connects to the wireless network, where if the connection succeeds, a connection result that includes a success code is returned to the smartcard client; and if the connection fails, a connection result that includes an error code may be returned to the smartcard client.

In this embodiment of the present invention, the method for accessing a wireless network may further include:
S407: The smartcard client manages the smartcard according to the connection result that is returned by the smartcard.

If the smartcard client receives the success code, the terminal is controlled, according to the received result of the connection success, to switch to a STA working mode; then the terminal connects to the wireless network; and the smartcard client searches for the smartcard that has already accessed the wireless network, and implements management on the smartcard.

If the smartcard client receives the error code, prompt information of the error may be displayed and a user may be notified of a connection failure.

In another embodiment of the present invention, when receiving the error code, the smartcard client may further connect to an official website of the smartcard through a network and query a solution corresponding to the error code, so that a fault of connecting to a wireless network by the smartcard is solved in time and timeliness of connecting to the wireless network by the smartcard is ensured.

In this embodiment of the present invention, the smartcard client acquires an SSID and a password of a wireless network that is currently accessed by a terminal, and notifies the smartcard of the SSID and password of the wireless network, so that the smartcard connects to the wireless network; and in addition, the smartcard client can manage the smartcard according to a result of a connection success of the smartcard, so that the management on the smartcard is quicker, more convenient, and more flexible, and manual input is avoided. In addition, in this embodiment of the present invention, the smartcard client can further prompt a user about a connection situation according to a connection result that is returned by the smartcard, so as to improve user experience.

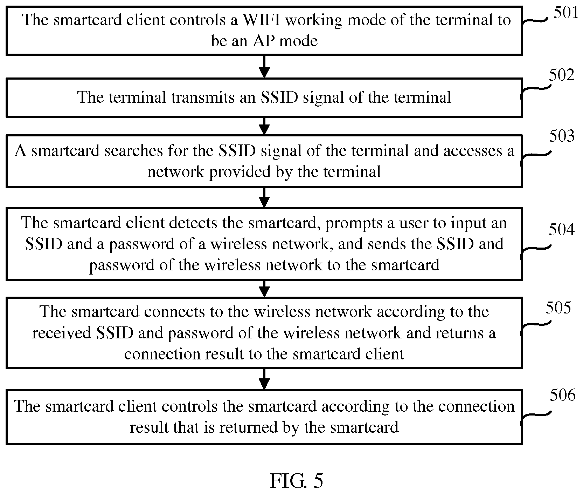

FIG. 5 provides another method for accessing a wireless network according to an embodiment of the present invention. In this embodiment, a smartcard is used as an example for description. The method may be applied to a system that includes a smartcard, a smartcard client, and a wireless network. In this embodiment of the present invention, the smartcard client is installed in a terminal, and the method includes the following steps:
S501: The smartcard client controls a WIFI working mode of the terminal to be an AP mode.

After the smartcard client is started on the terminal, the smartcard client enables the WIFI working mode of the terminal to be the AP mode by invoking an interface; and the terminal transmits an SSID signal of the terminal, so that the smartcard can access a network provided by the terminal.

S502: The terminal transmits an SSID signal of the terminal.

S503: The smartcard searches for the SSID signal of the terminal and accesses a network provided by the terminal.

S504: The smartcard client detects the smartcard, prompts a user to input an SSID and a password of the wireless network, and sends the SSID and password of the wireless network to the smartcard.

S505: The smartcard connects to the wireless network according to the received SSID and password of the wireless network and returns a connection result to the smartcard client.

In this embodiment of the present invention, the smartcard connects to the wireless network, where if the connection succeeds, a connection result that includes a success code is returned to the smartcard client; and if the connection fails, a connection result that includes an error code may be returned to the smartcard client.

In this embodiment of the present invention, the method for accessing a wireless network may further include:
S506: The smartcard client controls the smartcard according to the connection result that is returned by the smartcard.

If the smartcard client receives the success code, the terminal is controlled, according to the received result of the connection success, to switch to a STA working mode; then the terminal connects to the wireless network; and the smartcard client searches for the smartcard that has already accessed the wireless network so as to perform control on the smartcard and implement management on the smartcard.

If the smartcard client receives the error code, prompt information of the error may be displayed and a user may be notified of a connection failure.

In another embodiment of the present invention, when receiving the error code, the smartcard client may further connect to an official website of the smartcard through a network and query information corresponding to the error code, so that a solution is acquired according to the information corresponding to the error code, a fault of connecting to a wireless network by the smartcard is solved in time, and timeliness of connecting to the wireless network by the smartcard is ensured.

In this embodiment of the present invention, the smartcard client prompts a user to input an SSID and a password of a wireless network, so that access to the wireless network is quicker and easier and a user conveniently selects a wireless network that needs to be accessed; the smartcard client notifies the smartcard of the SSID and password of the wireless network, so that the smartcard connects to the wireless network; in addition, the smartcard client can manage the smartcard according to a result of a connection success of the smartcard, so that the management on the smartcard is quicker, more convenient, and more flexible. In addition, in this embodiment of the present invention, the smartcard client can further prompt a user about a connection situation according to a connection result that is returned by the smartcard, so as to improve user experience.

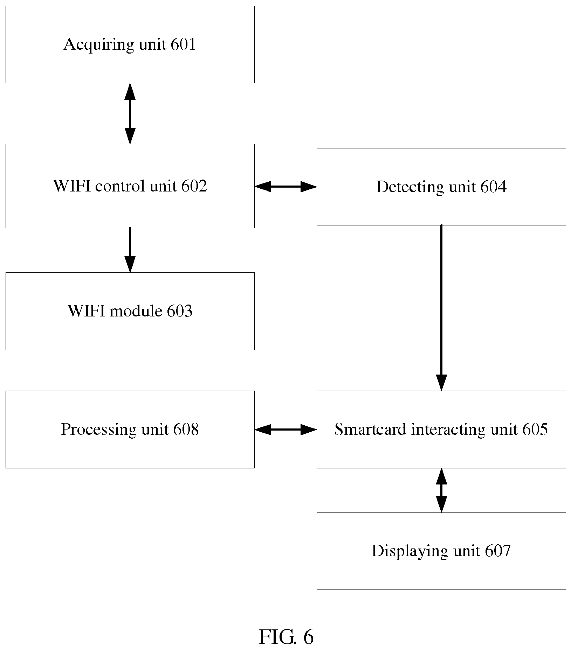

FIG. 6 is a schematic structural diagram of a terminal for accessing a wireless network according to an embodiment of the present invention, where the terminal includes an acquiring unit 601, a WIFI control unit 602, a WIFI module 603, a detecting unit 604, and a smartcard interacting unit 605.

The acquiring unit 601 is configured to acquire an SSID and a password of the wireless network.

In this embodiment of the present invention, the acquiring unit 601 may acquire the SSID and password of the wireless network in multiple manners.

For example, if the terminal currently accesses a wireless network, the acquiring unit 601 may acquire an SSID and a password of the wireless network that is currently accessed by the terminal. The acquiring unit 601 may further acquire the SSID and password of the wireless network by prompting a user to input the SSID and password of the wireless network.

In this embodiment of the present invention, the acquiring unit 601 may further include a prompting subunit 6011 and a receiving subunit 6012, where the prompting subunit 6011 is configured to prompt the user to input the SSID and password of the wireless network, and the receiving subunit 6012 is configured to receive the SSID and password of the wireless network that are input by the user.

The WIFI control unit 602 is configured to control switching of a working mode of the WIFI module 603 of the terminal. For example, the working mode is switched from a STA working mode to an AP working mode, or switched from an AP working mode to a STA working mode.

The WIFI module 603 is configured to transmit an SSID signal of the terminal.

The WIFI module 603 is configured to switch between the AP working mode and the STA working mode, where in the AP working mode, the SSID signal is transmitted; and in the STA working mode, the wireless network is accessed.

The detecting unit 604 is configured to detect a smartcard that accesses the terminal.

The smartcard interacting unit 605 is configured to send the SSID and password of the wireless network to the smartcard that accesses the terminal, and receive a connection result that is of a connection to the wireless network and is returned by the smartcard.

In another embodiment of the present invention, the WIFI control unit 602 is further configured to, when the connection result of the connection to the wireless network is a success, control the WIFI module 603 to switch to the STA working mode;
the WIFI module 603 is configured to switch to the STA working mode according to the WIFI control unit 602, and connect to the wireless network;
the detecting unit 604 is further configured to search for the smartcard that has already accessed the wireless network; and
the smartcard interacting unit 605 is further configured to manage the smartcard.

The terminal further includes a displaying unit 607, where the displaying unit 607 is configured to, when the connection result of the connection to the wireless network is a failure, display prompt information of the connection failure and notify a user of the connection failure.

The terminal further includes a processing unit 608, which is configured to connect to an official website corresponding to the smartcard, query information corresponding to an error code, and acquire a solution according to the information corresponding to the error code, so that a fault of connecting to the wireless network by the smartcard is solved in time, and timeliness of connecting to the wireless network by the smartcard is ensured.

In another embodiment of the present invention, the terminal further includes a processing unit 608 and a displaying unit607. The processing unit 608 is configured to, when the connection result of the connection to the wireless network is a failure, instruct the displaying unit 607 to display prompt information of the connection failure and notify a user of the connection failure, and the displaying unit 607 is configured to display the prompt information of the connection failure.

The processing unit 608 is further configured to connect to an official website corresponding to the smartcard and query a solution corresponding to an error code, so that a fault of connecting to the wireless network by the smartcard is solved in time, and timeliness of connecting to the wireless network by the smartcard is ensured.

In this embodiment of the present invention, the processing unit may be set to perform subsequent processing when the connection result of the connection to the wireless network is a success, or may be set to perform subsequent processing when the connection result of the connection to the wireless network is a failure, or set to always perform subsequent processing when the connection result of the connection to the wireless network is a success or a failure.

The terminal provided in this embodiment of the present invention acquires an SSID and a password of a wireless network and notifies the smartcard of the SSID and password of the wireless network, so that the smartcard connects to the wireless network; and in addition, the terminal can manage the smartcard according to a result of a connection success of the smartcard, so that the management on the smartcard is quicker, more convenient and more flexible. In addition, in this embodiment of the present invention, the terminal can further prompt a user about a connection situation according to a connection result that is returned by the smartcard, so as to improve user experience.

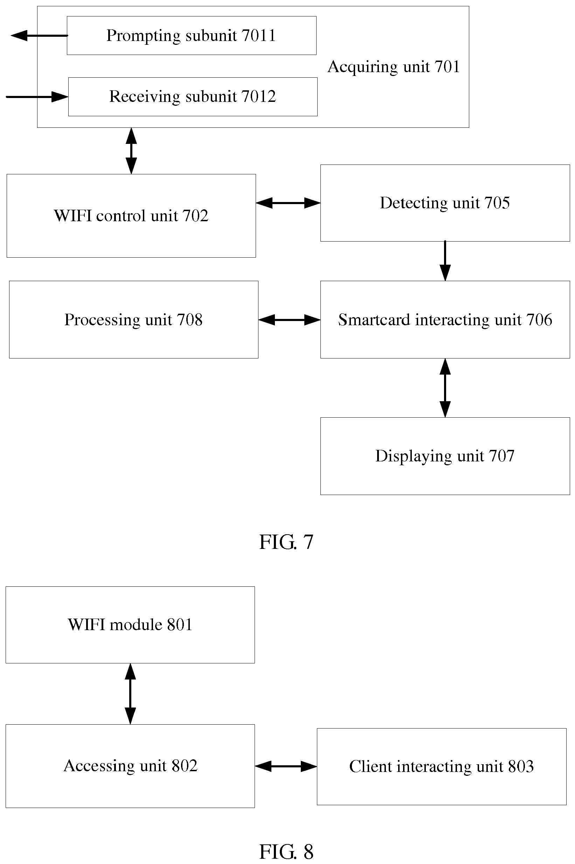

FIG. 7 is a schematic structural diagram of a client for accessing a wireless network according to an embodiment of the present invention, where the client 70 may be installed on a terminal 10, where the terminal includes a WIFI module 703, and the client 70 performs management on a smartcard by using the terminal. The client 70 includes an acquiring unit 701, a WIFI control unit 702, a detecting unit 705, and a smartcard interacting unit 706.

The acquiring unit 701 is configured to acquire an SSID and a password of the wireless network.

In this embodiment of the present invention, the acquiring unit 701 may acquire the SSID and password of the wireless network in multiple manners.

For example, if the terminal currently accesses a wireless network, the acquiring unit 701 may acquire an SSID and a password of the wireless network that is currently accessed by the terminal. The acquiring unit 701 may further acquire the SSID and password of the wireless network by prompting a user to input the SSID and password of the wireless network.

In this embodiment of the present invention, the acquiring unit 701 may further include a prompting subunit 7011 and a receiving subunit 7012, where the prompting subunit 7011 is configured to prompt the user to input the SSID and password of the wireless network, and the receiving subunit 7012 is configured to receive the SSID and password of the wireless network that are input by the user.

The WIFI control unit 702 is configured to control switching of a WIFI working mode of the terminal. For example, the WIFI control unit 702 controls the WIFI module of the terminal to switch from a STA working mode to an AP working mode, or switch from an AP working mode to a STA working mode. The WIFI module 703 is further configured to transmit an SSID signal of the terminal when the terminal is in the AP working mode.

The detecting unit 705 is configured to detect a smartcard that accesses the terminal.

The smartcard interacting unit 706 is configured to send the SSID and password of the wireless network to the smartcard that accesses the terminal, and receive a connection result that is of a connection to the wireless network and is returned by the smartcard.

In this embodiment of the present invention, the processing unit 707 is configured to instruct the WIFI control unit 702 to control the terminal to switch to the STA working mode.

The WIFI control unit 702 is further configured to, when the connection result of the connection to the wireless network is a success, control the terminal to switch to the STA working mode.

The WIFI module 703 of the terminal is configured to switch to the STA mode according to an instruction of the WIFI control unit 702, and connect to the wireless network.

The detecting unit 705 is further configured to search for the smartcard that has already accessed the wireless network.

The smartcard interacting unit 706 is further configured to control the smartcard.

The client 70 further includes a displaying unit 707, which is configured to, when the connection result of the connection to the wireless network is a failure, display prompt information of the connection failure and notify a user of the connection failure.

The client further includes a processing unit 708, which is configured to connect to an official website corresponding to the smartcard, query information corresponding to an error code, and acquire a solution according to the information corresponding to the error code, so that a fault of connecting to the wireless network by the smartcard is solved in time, and timeliness of connecting to the wireless network by the smartcard is ensured.

In another embodiment of the present invention, the client 70 further includes a processing unit 708 and a displaying unit 707.

The processing unit 708 is configured to, when the connection result of the connection to the wireless network is a failure, instruct the displaying unit 707 to display prompt information of the connection failure and notify a user of the connection failure.

The displaying unit 707 is configured to display the prompt information of the connection failure.

The processing unit 708 is further configured to connect to an official website of the smartcard and query a solution corresponding to an error code, so that a fault of connecting to the wireless network by the smartcard is solved in time, and timeliness of connecting to the wireless network by the smartcard is ensured.

The client in this embodiment of the present invention may be installed in the terminal, and the terminal may include a mobile terminal and an intelligent terminal, such as a mobile phone, a PAD, and a palmtop computer.

The client provided in this embodiment of the present invention acquires an SSID and a password of a wireless network and notifies the smartcard of the SSID and password of the wireless network, so that the smartcard connects to the wireless network; and in addition, the client can manage the smartcard according to a result of a connection success of the smartcard, so that the management on the smartcard is quicker, more convenient, and more flexible. In addition, in this embodiment of the present invention, the client can further prompt a user about a connection situation according to a connection result that is returned by the smartcard, so as to improve user experience.

FIG. 8 is a schematic structural diagram of a smartcard for accessing a wireless network according to an embodiment of the present invention, where the smartcard is configured to interact with a terminal and access the wireless network, and a smartcard client corresponding to the smartcard is installed on the terminal. The smartcard includes a WIFI module 801, an accessing unit 802, and a client interacting unit 803.

The WIFI module 801 is configured to search for an SSID signal of the terminal.

The accessing unit 802 is configured to access, according to the SSID signal of the terminal, a network provided by the terminal, and is further configured to access the wireless network according to an SSID and a password of the wireless network that are received by the client interacting unit 803.

The client interacting unit 803 is configured to receive the SSID and password of the wireless network that are sent by the smartcard client, and is further configured to return a connection result of a connection to the wireless network to the smartcard client.

In this embodiment of the present invention, the smartcard connects to the wireless network, where if the connection succeeds, a connection result that includes a success code is returned to the smartcard client; and if the connection fails, a connection result that includes an error code may be returned to the smartcard client.

The smartcard in this embodiment of the present invention is disposed in a wearable device.

The smartcard provided in this embodiment of the present invention acquires an SSID and a password of a wireless network and connects to the wireless network; and in addition, the smartcard can return a result of a connection success of the smartcard to a smartcard client, so that the smartcard client can flexibly and quickly manage the smartcard, and the management on the smartcard is quicker, more convenient, and more flexible. In addition, in this embodiment of the present invention, the smartcard can further prompt a user about a connection situation according to a connection result that is returned by the smartcard, so as to improve user experience.

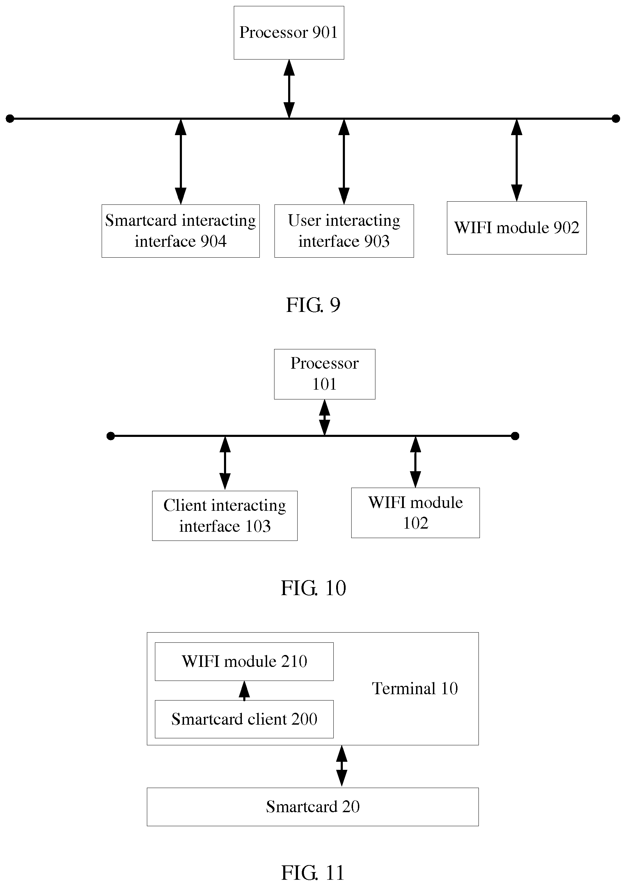

An embodiment of the present invention further provides a terminal for accessing a wireless network. As shown in FIG. 9, the terminal includes a processor 901, a WIFI module 902, a user interacting interface 903, and a smartcard interacting interface 904. The processor 901, the WIFI module 902, the user interacting interface 903, and smartcard interacting interface 904 are connected by using a bus.

The processor 901 is configured to acquire an SSID and a password of the wireless network.

In this embodiment of the present invention, the processor 901 may acquire the SSID and password of the wireless network in multiple manners.

For example, if the terminal currently accesses a wireless network, the processor 901 may acquire an SSID and a password of the wireless network that is currently accessed by the terminal. The processor 901 may further acquire the SSID and password of the wireless network by instructing the user interacting interface 903 to prompt a user to input the SSID and password of the wireless network.

The processor 901 is further configured to control switching of a working mode of the WIFI module 902. For example, the working mode is switched from a STA working mode to an AP working mode, or switched from an AP working mode to a STA working mode.

The WIFI module 902 is configured to transmit an SSID signal in the AP working mode.

The WIFI module 902 is further configured to connect to the wireless network in the STA mode.

The processor 901 is further configured to detect a smartcard that accesses the terminal.

The processor 901 is further configured to control the smartcard interacting interface 904 to send the SSID and password of the wireless network to the smartcard that accesses the terminal.

The smartcard interacting interface 904 is configured to send the SSID and password of the wireless network to the smartcard that accesses the terminal, and receive a connection result that is of the connection to the wireless network and is returned by the smartcard.

In this embodiment of the present invention, the processor 901 is further configured to, when the connection result of the connection to the wireless network is a success, instruct the WIFI module 902 to switch to the STA working mode.

The WIFI module is configured to connect to the wireless network.

The processor 901 is further configured to control the smartcard interacting interface 904 to search for the smartcard that has already accessed the wireless network, the smartcard interacting interface 904 searches for the smartcard that has already accessed the wireless network, and the processor 901 is further configured to manage the smartcard.

The processor 901 is further configured to, when the connection result of the connection to the wireless network is a failure, instruct the user interacting interface 904 to display prompt information of the connection failure, and notify a user of the connection failure.

The processor 901 is further configured to connect to an official website of the smartcard and query a solution corresponding to an error code, so that a fault of connecting to the wireless network by the smartcard is solved in time, and timeliness of connecting to the wireless network by the smartcard is ensured.

The terminal provided in this embodiment of the present invention acquires an SSID and a password of a wireless network and notifies the smartcard of the SSID and password of the wireless network, so that the smartcard connects to the wireless network; and in addition, the terminal can manage the smartcard according to a result of a connection success of the smartcard, so that the management on the smartcard is quicker, more convenient, and more flexible. In addition, in this embodiment of the present invention, the terminal can further prompt a user about a connection situation according to a connection result that is returned by the smartcard, so as to improve user experience.

An embodiment of the present invention further provides a smartcard for accessing a wireless network. As shown in FIG. 10, the smartcard includes a processor 101, a WIFI module 102, and a client interacting interface 103. The processor 101, the WIFI module 102, and the client interacting interface 103 are connected by using a bus. The smartcard can interact with a terminal on which the smartcard client has been installed.

The WIFI module 102 is configured to search for an SSID signal of the terminal.

The WIFI module 102 is further configured to access, according to the SSID signal of the terminal, a network provided by the terminal.

The client interacting interface 103 is configured to receive an SSID and a password of the wireless network that are sent by the smartcard client.

The WIFI module 102 is further configured to access the wireless network according to the SSID and password of the wireless network.

The client interacting interface 103 is further configured to return a connection result of a connection to the wireless network to the smartcard client.

In this embodiment of the present invention, the smartcard connects to the wireless network, where if the connection succeeds, a connection result that includes a success code is returned to the smartcard client; and if the connection fails, a connection result that includes an error code may be returned to the smartcard client.

The smartcard in this embodiment of the present invention is disposed in a wearable device.

The smartcard provided in this embodiment of the present invention acquires an SSID and a password of a wireless network and connects to the wireless network; and in addition, the smartcard can return a result of a connection success of the smartcard to a smartcard client, so that the smartcard client can flexibly and quickly manage the smartcard, and the management on the smartcard is quicker, more convenient, and more flexible. In addition, in this embodiment of the present invention, the smartcard can further prompt a user about a connection situation according to a connection result that is returned by the smartcard, so as to improve user experience.

A system for accessing a wireless network according to an embodiment of the present invention is described with reference to FIG. 1. As shown in FIG. 1, the system includes a smartcard 20, a terminal 10, and a wireless network 30. In this embodiment of the present invention, the smartcard client is installed in the terminal.

The terminal is configured to acquire an SSID and a password of the wireless network, and transmit an SSID signal of the terminal. The smartcard searches for the SSID signal of the terminal and accesses the terminal; the terminal sends the SSID and password of the wireless network to the smartcard; the smartcard accesses the wireless network according to the received SSID and password of the wireless network, and returns a connection result of the access to the wireless network to the terminal. When the connection result of the access to the wireless network is a success, the terminal switches to a STA working mode, accesses the wireless network, and searches for the smartcard that has already accessed the wireless network; and the terminal may perform management on the smartcard by using the smartcard client. When the connection result of the access to the wireless network is a failure, the terminal displays prompt information of the connection failure, and notifies a user of the connection failure. The terminal may further connect to an official website corresponding to the smartcard and query a solution corresponding to an error code, so that a fault of connecting to the wireless network by the smartcard is solved in time, and timeliness of connecting to the wireless network by the smartcard is ensured.

The terminal provided in this embodiment of the present invention acquires an SSID and a password of a wireless network and notifies the smartcard of the SSID and password of the wireless network, so that the smartcard connects to the wireless network; and in addition, the terminal can manage the smartcard according to a result of a connection success of the smartcard, so that the management on the smartcard is quicker, more convenient, and more flexible. In addition, in this embodiment of the present invention, the terminal can further prompt a user about a connection situation according to a connection result that is returned by the smartcard, so as to improve user experience.

As shown in FIG. 11, which is a system for accessing a wireless network according to an embodiment of the present invention. The system includes a terminal 10 and a smartcard 20, where a smartcard client 200 corresponding to the smartcard is installed on the terminal. The smartcard client is configured to acquire an SSID and a password of the wireless network, control a WIFI working mode of the terminal to be an AP mode, and detect the smartcard that accesses the terminal. The terminal is configured to transmit an SSID signal of the terminal in the AP working mode. The smartcard is configured to search for the SSID signal of the terminal and access the terminal, and is further configured to connect to the wireless network according to the received SSID and password of the wireless network that are sent by the smartcard client, and return a connection result to the smartcard client.

The smartcard client is further configured to receive the connection result that is returned by the smartcard, and if the result is a connection success, the terminal is controlled, according to the received result of the connection success, to switch to a STA working mode; the terminal is further configured to connect to the wireless network in the STA working mode; and the smartcard client is further configured to search for the smartcard that has already accessed the wireless network so as to perform control on the smartcard.

In this embodiment of the present invention, as shown in FIG. 11, the smartcard client 200 can implement, by controlling a WIFI module 210 in the terminal, switching of the WIFI working mode between the STA working mode and the AP working mode.

The smartcard client is further configured to receive a connection result that includes an error code and is returned by the smartcard, connect to an official website of the smartcard through a network, query information corresponding to the error code, and acquire a solution corresponding to the error code, so that a fault of connecting to the wireless network by the smartcard is solved in time, and timeliness of connecting to the wireless network by the smartcard is ensured.

The system provided in this embodiment of the present invention acquires an SSID and a password of a wireless network and notifies the smartcard of the SSID and password of the wireless network, so that the smartcard connects to the wireless network; and in addition, the system can manage the smartcard according to a result of a connection success of the smartcard, so that the management on the smartcard is quicker, more convenient, and more flexible. In addition, in this embodiment of the present invention, the system can further prompt a user about a connection situation according to a connection result that is returned by the smartcard, so as to improve user experience.

Persons skilled in the art should understand that the embodiments of the present invention may be provided as a method, a system, or a computer program product. Therefore, the present invention may use a form of hardware only embodiments, software only embodiments, or embodiments with a combination of software and hardware. Moreover, the present invention may use a form of a computer program product that is implemented on one or more computer-usable storage media (including but not limited to a disk memory, a CD-ROM, an optical memory, and the like) that include computer-usable program code.

The present invention is described with reference to the flowcharts and/or block diagrams of the method, the device (system), and the computer program product according to the embodiments of the present invention. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

These computer program instructions may also be stored in a computer readable memory that can instruct the computer or any other programmable data processing device to work in a specific manner, so that the instructions stored in the computer readable memory generate an artifact that includes an instruction apparatus. The instruction apparatus implements a specific function in one or more processes in the flowcharts and/or in one or more blocks in the block diagrams.

These computer program instructions may also be loaded onto a computer or another programmable data processing device, so that a series of operations and steps are performed on the computer or the another programmable device, thereby generating computer-implemented processing. Therefore, the instructions executed on the computer or the another programmable device provide steps for implementing a specific function in one or more processes in the flowcharts and/or in one or more blocks in the block diagrams.

Although some preferred embodiments of the present invention have been described, persons skilled in the art can make changes and modifications to these embodiments once they learn the basic inventive concept.

## Claims

1. A method for accessing a wireless network, comprising:
acquiring (201), by a terminal, a Service Set Identifier, SSID, and a password of the wireless network;
controlling (202) a WIFI working mode of the terminal to be an Access Point, AP, mode, and transmitting a signal of an SSID of the terminal;
detecting (203) a smartcard that accesses the terminal, and sending the SSID and password of the wireless network to the smartcard;
connecting (406) the smartcard to the wireless network according to the received SSID and password of the wireless network and returning, by the smartcard, a connection result to the terminal;
wherein connecting the smartcard to the wireless network according to the received SSID and password of the wireless network and returning, by the smartcard, a connection result to the terminal comprises:
connecting, by the smartcard, to the wireless network and if the connection succeeds, returning a connection result that comprises a success code to the terminal; and
if the connection result that is returned by the smartcard and received by the terminal indicates a connection success, controlling, according to the received result of the connection success, the terminal to switch to a Station, STA, working mode, to connect to the wireless network and to search for the smartcard that has already accessed the wireless network so as to perform control on the smartcard.

2. The method according to claim 1, wherein connecting the smartcard to the wireless network according to the received SSID and password of the wireless network and returning, by the smartcard, a connection result to the terminal comprises:
if the connection fails, returning a connection result that comprises an error code to the terminal, managing, by the terminal, the smartcard according to the connection result that is returned by the smartcard.

3. A terminal for accessing a wireless network, comprising an acquiring unit (601), a WIFI control unit (602), a WIFI module (603), a detecting unit (604), and a smartcard interacting unit (605), wherein
the acquiring unit (601) is configured to acquire an SSID and a password of the wireless network;
the WIFI control unit (602) is configured to control a working mode of the WIFI module (603) to be an AP working mode;
the WIFI module (603) is configured to transmit a signal of an SSID of the terminal in the AP working mode;
the detecting unit (604) is configured to detect a smartcard that accesses the terminal; and
the smartcard interacting unit (605) is configured to send the SSID and password of the wireless network to the smartcard that accesses the terminal, and receive a connection result that is of a connection to the wireless network and is returned by the smartcard; and
wherein the WIFI control unit (602) is further configured to, when the connection result of the connection to the wireless network is a success, control the WIFI module (603) to switch to a STA working mode;
the WIFI module (603) is further configured to switch to the STA working mode according to the WIFI control unit (602), and connect to the wireless network;
the detecting unit (604) is further configured to search for the smartcard that has already accessed the wireless network; and
the smartcard interacting unit (605) is further configured to control the smartcard.

4. The terminal according to claim 3, further comprising a displaying unit (607), which is configured to, when the connection result of the connection to the wireless network is a failure, display prompt information of the connection failure and notify a user of the connection failure.

5. The terminal according to claim 4, wherein the connection result of the connection to the wireless network comprises an error code, and the terminal further comprises a processing unit (608), which is configured to connect to an official website corresponding to the smartcard and query information corresponding to the error code.

6. A client for accessing a wireless network, wherein the client is configured to be installed on a terminal and the client comprises an acquiring unit (701), a WIFI control unit (702), a detecting unit (705), and a smartcard interacting unit (706), wherein
the acquiring unit (701) is configured to acquire an SSID and a password of the wireless network;
the WIFI control unit (702) is configured to control a WIFI working mode of the terminal to be an AP working mode and to control the terminal to transmit a signal of an SSID of the terminal;
the detecting unit (705) is configured to detect a smartcard that accesses the terminal; and
the smartcard interacting unit (706) is configured to send the SSID and password of the wireless network to the smartcard that accesses the terminal, and receive a connection result that is of a connection to the wireless network and is returned by the smartcard;
wherein the WIFI control unit (702) is further configured to, when the connection result of the connection to the wireless network is a success, control the terminal to switch to a STA working mode and to connect to the wireless network;
the detecting unit (705) is further configured to search for the smartcard that has already accessed the wireless network; and
the smartcard interacting unit (706) is further configured to control the smartcard.

7. The client according to claim 6, wherein the acquiring unit (701) comprises a prompting subunit (7011) and a receiving subunit (7012), wherein
the prompting subunit (7011) is configured to prompt a user to input the SSID and password of the wireless network; and
the receiving subunit (7012) is configured to receive the SSID and password of the wireless network that are input by the user.

8. The client according to claim 6, further comprising a displaying unit (707), which is configured to, when the connection result of the connection to the wireless network is a failure, display prompt information of the connection failure and notify a user of the connection failure; and
the client further comprises a processing unit (708), which is configured to connect to an official website corresponding to the smartcard and query information corresponding to an error code.

9. A system for accessing a wireless network, wherein the system comprises a terminal according to claims 3-5 and a smartcard.

## Patentansprüche

1. Verfahren zum Zugriff auf ein drahtloses Netzwerk, umfassend:
Abrufen (201) einer Dienstsatzkennung, SSID, und eines Kennworts des drahtlosen Netzwerks durch ein Endgerät;
derartiges Steuern (202) eines WIFI-Arbeitsmodus des Endgeräts, dass er ein Zugangspunkt, AP,-Modus ist, und Senden eines Signals einer SSID des Endgeräts;
Erkennen (203) einer Smartcard, die auf das Endgerät zugreift, und Senden der SSID und des Kennworts des drahtlosen Netzwerks an die Smartcard;
Verbinden (406) der Smartcard mit dem drahtlosen Netzwerk gemäß der empfangenen SSID und dem empfangenen Kennwort des drahtlosen Netzwerks und Zurücksenden eines Verbindungsergebnisses durch die Smartcard an das Endgerät;
wobei das Verbinden der Smartcard mit dem drahtlosen Netzwerk gemäß der empfangenen SSID und dem empfangenen Kennwort des drahtlosen Netzwerks und Zurücksenden eines Verbindungsergebnisses durch die Smartcard an das Endgerät umfasst:
Herstellen einer Verbindung durch die Smartcard zum drahtlosen Netzwerk und, wenn die Verbindung erfolgreich ist, Zurücksenden eines Verbindungsergebnisses, dass einen Erfolgscode umfasst, an das Endgerät; und
derartiges Steuern, wenn das Verbindungsergebnis, das von der Smartcard zurückgesendet und vom Endgerät empfangen wird, einen Verbindungserfolg anzeigt, des Endgeräts gemäß dem empfangenen Ergebnis des Verbindungserfolgs, dass es in einen Stations, STA,-Arbeitsmodus schaltet, um eine Verbindung zum drahtlosen Netzwerk herzustellen und nach der Smartcard zu suchen, die bereits auf das drahtlose Netzwerk zugegriffen hat, um Steuerung an der Smartcard durchzuführen.

2. Verfahren nach Anspruch 1, wobei das Verbinden der Smartcard mit dem drahtlosen Netzwerk gemäß der empfangenen SSID und dem empfangenen Kennwort des drahtlosen Netzwerks und Zurücksenden eines Verbindungsergebnisses durch die Smartcard an das Endgerät umfasst:
Zurücksenden, wenn die Verbindung fehlschlägt, eines Verbindungsergebnisses, das einen Fehlercode umfasst, an das Endgerät und Verwalten der Smartcard durch das Endgerät gemäß dem Verbindungsergebnis, das von der Smartcard zurückgesendet wird.

3. Endgerät zum Zugreifen auf ein drahtloses Netzwerk, umfassend eine Abrufeinheit (601), eine WIFI-Steuereinheit (602), ein WIFI-Modul (603), eine Erkennungseinheit (604) und eine Einheit zum Interagieren mit einer Smartcard (605), wobei die Abrufeinheit (601) zum Abrufen einer SSID und eines Kennworts des drahtlosen Netzwerks konfiguriert ist;
die WIFI-Steuereinheit (602) so konfiguriert ist, dass sie einen Arbeitsmodus des WIFI-Moduls (603) so steuert, dass er ein AP-Arbeitsmodus ist;
das WIFI-Modul (603) zum Senden eines Signals einer SSID des Endgeräts im AP-Arbeitsmodus konfiguriert ist;
die Erkennungseinheit (604) zum Erkennen einer Smartcard konfiguriert ist, die auf das Endgerät zugreift; und
die Einheit zum Interagieren mit einer Smartcard (605) so konfiguriert ist, dass sie die SSID und das Kennwort des drahtlosen Netzwerks an die Smartcard sendet, die auf das Endgerät zugreift, und ein Verbindungsergebnis empfängt, das von einer Verbindung mit dem drahtlosen Netzwerk ist und von der Smartcard zurückgesendet wird; und
wobei die WIFI-Steuereinheit (602) ferner so konfiguriert ist, dass sie, wenn das Verbindungsergebnis der Verbindung mit dem drahtlosen Netzwerk ein Erfolg ist, das WIFI-Modul (603) so steuert, das es in einen STA-Arbeitsmodus schaltet;
das WIFI-Modul (603) ferner so konfiguriert ist, dass es gemäß der WIFI-Steuereinheit (602) in den STA-Arbeitsmodus schaltet und eine Verbindung zum drahtlosen Netzwerk herstellt;
die Erkennungseinheit (604) ferner so konfiguriert ist, dass sie nach der Smartcard sucht, die bereits auf das drahtlose Netzwerk zugegriffen hat; und
die Einheit zum Interagieren mit einer Smartcard (605) ferner zum Steuern der Smartcard konfiguriert ist.

4. Endgerät nach Anspruch 3, ferner umfassend eine Anzeigeeinheit (607) die so konfiguriert ist, dass sie, wenn das Verbindungsergebnis der Verbindung mit dem drahtlosen Netzwerk ein Fehlschlag ist, Hinweisinformationen des Verbindungsfehlschlags anzeigt und einen Benutzer vom Verbindungsfehlschlag benachrichtigt.

5. Endgerät nach Anspruch 4, wobei das Verbindungsergebnis der Verbindung mit dem drahtlosen Netzwerk einen Fehlercode umfasst, und das Endgerät ferner eine Verarbeitungseinheit (608) umfasst, die so konfiguriert ist, dass sie eine Verbindung zu einer offiziellen Website herstellt, die der Smartcard entspricht, und Informationen abfragt, die dem Fehlercode entsprechen.

6. Client zum Zugreifen auf ein drahtloses Netzwerk, wobei der Client konfiguriert ist, um auf einem Endgerät installiert zu werden, und der Client eine Abrufeinheit (701), eine WIFI-Steuereinheit (702), eine Erkennungseinheit (705) und eine Einheit zum Interagieren mit einer Smartcard (706) umfasst, wobei
die Abrufeinheit (701) zum Abrufen einer SSID und eines Kennworts des drahtlosen Netzwerks konfiguriert ist;
die WIFI-Steuereinheit (702) so konfiguriert ist, dass sie einen WIFI-Arbeitsmodus des Endgeräts so steuert, dass er ein AP-Arbeitsmodus ist, und das Endgerät so steuert, dass es ein Signal einer SSID des Endgeräts sendet;
die Erkennungseinheit (705) zum Erkennen einer Smartcard konfiguriert ist, die auf das Endgerät zugreift; und
die Einheit zum Interagieren mit einer Smartcard (706) so konfiguriert ist, dass sie die SSID und das Kennwort des drahtlosen Netzwerks an die Smartcard sendet, die auf das Endgerät zugreift, und ein Verbindungsergebnis empfängt, das von einer Verbindung mit dem drahtlosen Netzwerk ist und von der Smartcard zurückgesendet wird;
wobei die WIFI-Steuereinheit (702) ferner so konfiguriert ist, dass sie, wenn das Verbindungsergebnis der Verbindung mit dem drahtlosen Netzwerk ein Erfolg ist, das Endgerät so steuert, das es in einen STA-Arbeitsmodus schaltet und eine Verbindung zum drahtlosen Netzwerk herstellt;
die Erkennungseinheit (705) ferner so konfiguriert ist, dass sie nach der Smartcard sucht, die bereits auf das drahtlose Netzwerk zugegriffen hat; und
die Einheit zum Interagieren mit einer Smartcard (706) ferner zum Steuern der Smartcard konfiguriert ist.

7. Client nach Anspruch 6, wobei die Abrufeinheit (701) eine Eingabeaufforderungs-Untereinheit (7011) und eine Empfangsuntereinheit (7012) umfasst, wobei die Eingabeaufforderungs-Untereinheit (7011) so konfiguriert ist, dass sie einen Benutzer zum Eingeben der SSID und des Kennworts des drahtlosen Netzwerks auffordert;
die Empfangs-Untereinheit (7012) so konfiguriert ist, dass sie die SSID und das Kennwort des drahtlosen Netzwerks empfängt, die durch den Benutzer eingegeben werden.

8. Client nach Anspruch 6, ferner umfassend eine Anzeigeeinheit (707) die so konfiguriert ist, dass sie, wenn das Verbindungsergebnis der Verbindung mit dem drahtlosen Netzwerk ein Fehlschlag ist, Hinweisinformationen des Verbindungsfehlschlags anzeigt und einen Benutzer vom Verbindungsfehlschlag benachrichtigt;
der Client ferner eine Verarbeitungseinheit (708) umfasst, die so konfiguriert ist, dass sie eine Verbindung zu einer offiziellen Website herstellt, die der Smartcard entspricht, und Informationen abfragt, die einem Fehlercode entsprechen.

9. System zum Zugreifen auf ein drahtloses Netzwerk, wobei das System ein Endgerät nach einem der Ansprüche 3 bis 5 und eine Smartcard umfasst.

## Revendications

1. Procédé permettant d'accéder à un réseau sans fil, comprenant les étapes suivantes :
acquérir (201), par un terminal, un identifiant d'ensemble de services, SSID, et un mot de passe du réseau sans fil ;
commander (202) un mode de fonctionnement WIFI du terminal pour un passage à un mode de point d'accès, AP, et transmettre un signal d'un SSID du terminal ;
détecter (203) une carte à puce qui accède au terminal, et envoyer le SSID et le mot de passe du réseau sans fil à la carte à puce ;
connecter (406) la carte à puce au réseau sans fil selon les SSID et mot de passe reçus du réseau sans fil et retourner, par la carte à puce, un résultat de connexion au terminal ;
les étapes consistant à connecter la carte à puce au réseau sans fil selon les SSID et mot de passe reçus du réseau sans fil et à retourner, par la carte à puce, un résultat de connexion au terminal comprenant :
se connecter, par la carte à puce, au réseau sans fil, et si la connexion réussit, retourner un résultat de connexion qui comporte un code de succès au terminal ; et
si le résultat de connexion qui est retourné par la carte à puce et reçu par le terminal indique un succès de connexion, commander, selon le résultat reçu du succès de connexion, au terminal de commuter vers un mode de fonctionnement de station, STA, de se connecter au réseau sans fil et de rechercher la carte à puce qui a déjà accédé au réseau sans fil afin d'exécuter un contrôle sur la carte à puce.

2. Procédé selon la revendication 1, dans lequel l'étape consistant à connecter la carte à puce au réseau sans fil selon les SSID et mot de passe reçus du réseau sans fil et à retourner, par la carte à puce, un résultat de connexion au terminal comprend :
si la connexion échoue, retourner un résultat de connexion qui comporte un code d'erreur au terminal, gérer, par le terminal, la carte à puce selon le résultat de connexion qui est retourné par la carte à puce.

3. Terminal permettant d'accéder à un réseau sans fil, comprenant une unité d'acquisition (601), une unité de contrôle WIFI (602), un module WIFI (603), une unité de détection (604), et une unité d'interaction de carte à puce (605),
l'unité d'acquisition (601) étant configurée pour acquérir un SSID et un mot de passe du réseau sans fil ;
l'unité de contrôle WIFI (602) étant configurée pour commander un mode de fonctionnement du module WIFI (603) afin qu'il passe à un mode de fonctionnement AP;
le module WIFI (603) étant configuré pour transmettre un signal d'un SSID du terminal dans le mode de fonctionnement AP ;
l'unité de détection (604) étant configurée pour détecter une carte à puce qui accède au terminal ; et
l'unité d'interaction de carte à puce (605) étant configurée pour envoyer le SSID et le mot de passe du réseau sans fil à la carte à puce qui accède au terminal, et recevoir un résultat de connexion qui concerne une connexion au réseau sans fil et qui est retourné par la carte à puce ; et
l'unité de contrôle WIFI (602) étant en outre configurée pour commander, lorsque le résultat de connexion de la connexion au réseau sans fil est un succès, au module WIFI (603) de commuter vers un mode de fonctionnement STA ;
le module WIFI (603) étant en outre configuré pour commuter vers le mode de fonctionnement STA selon l'unité de contrôle WIFI (602), et se connecter au réseau sans fil ;
l'unité de détection (604) étant en outre configurée pour rechercher la carte à puce qui a déjà accédé au réseau sans fil ; et
l'unité d'interaction de carte à puce (605) étant en outre configurée pour commander la carte à puce.

4. Terminal selon la revendication 3, comprenant en outre une unité d'affichage (607), qui est configurée pour afficher promptement, lorsque le résultat de connexion de la connexion avec le réseau sans fil est un échec, des informations de l'échec de connexion et notifier à un utilisateur l'échec de connexion.

5. Terminal selon la revendication 4, dans lequel le résultat de connexion de la connexion avec le réseau sans fil comprend un code d'erreur, et le terminal comprend en outre une unité de traitement (608), qui est configurée pour se connecter à un site Web officiel correspondant à la carte à puce et demander des informations correspondant au code d'erreur.

6. Client permettant d'accéder à un réseau sans fil, dans lequel le client est configuré pour être installé sur un terminal et le client comprend une unité d'acquisition (701), une unité de contrôle WIFI (702), une unité de détection (705), et une unité d'interaction de carte à puce (706),
l'unité d'acquisition (701) étant configurée pour acquérir un SSID et un mot de passe du réseau sans fil ;
l'unité de contrôle WIFI (702) étant configurée pour commander un mode de fonctionnement WIFI du terminal pour qu'il passe dans un mode de fonctionnement AP et pour commander au terminal de transmettre un signal d'un SSID du terminal ; l'unité de détection (705) étant configurée pour détecter une carte à puce qui accède au terminal ; et
l'unité d'interaction de carte à puce (706) étant configurée pour envoyer le SSID et le mot de passe du réseau sans fil à la carte à puce qui accède au terminal, et recevoir un résultat de connexion qui concerne une connexion avec le réseau sans fil et qui est retourné par la carte à puce ;
l'unité de contrôle WIFI (702) étant en outre configurée pour commander, lorsque le résultat de connexion de la connexion avec le réseau sans fil est un succès, au terminal de commuter vers un mode de fonctionnement STA et de se connecter au réseau sans fil ;
l'unité de détection (705) étant en outre configurée pour rechercher la carte à puce qui a déjà accédé au réseau sans fil ; et
l'unité d'interaction de carte à puce (706) étant en outre configurée pour commander la carte à puce.

7. Client selon la revendication 6, dans lequel l'unité d'acquisition (701) comprend une sous-unité d'invite (7011) et une sous-unité de réception (7012),
la sous-unité d'invite (7011) étant configurée pour inviter un utilisateur à entrer le SSID et le mot de passe du réseau sans fil ; et
la sous-unité de réception (7012) étant configurée pour recevoir le SSID et le mot de passe du réseau sans fil qui sont entrés par l'utilisateur.

8. Client selon la revendication 6, comprenant en outre une unité d'affichage (707), qui est configurée pour afficher promptement, lorsque le résultat de connexion de la connexion avec le réseau sans fil est un échec, des informations de l'échec de connexion et notifier à un utilisateur l'échec de connexion ; et
le client comporte en outre une unité de traitement (708), qui est configurée pour se connecter à un site Web officiel correspondant à la carte à puce et demander des informations correspondant à un code d'erreur.

9. Système permettant d'accéder à un réseau sans fil, dans lequel le système comprend un terminal selon les revendications 3-5 et une carte à puce.
